# EUROPEAN PATENT APPLICATION

(11) **EP 3 667 251 A1**
(43) Date of publication of application: **17.06.2020**
(21) Application number: 18842902.1
(22) Date of filing: 17.07.2018
(51) Int. Cl.: G01D 21/00, H04M 11/00, H04Q 9/00

(54) **SENSOR MANAGEMENT UNIT, SENSOR DEVICE, SENSOR MANAGEMENT METHOD, AND SENSOR MANAGEMENT PROGRAM**

(30) Priority: 09.08.2017 JP 2017153898; 30.11.2017 JP 2017230051
(71) Applicant: Omron Corporation, Kyoto-shi, Kyoto 600-8530 (JP)
(72) Inventor: NAITO, Takeshi, Kizugawa-shi Kyoto 619-0283 (JP)
(74) Representative: Horn Kleimann Waitzhofer Patentanwälte PartG mbB
(86) International application number: PCT/JP2018/026630
(87) International publication number: WO 2019/031162

(57) **Abstract**

A sensor management unit according to an aspect of the present invention includes: a sensing data acquisition portion configured to acquire sensing data obtained by a sensor observing a target; a metadata generating portion configured to generate dynamic metadata indicating an attribute of the sensor at a point in time when the sensing data is obtained, the attribute relating to a form of use of the sensor that may dynamically change over time; and a metadata managing portion configured to manage the generated dynamic metadata in association with the sensing data.

## Description

### TECHNICAL FIELD

The present invention relates to a sensor management unit, a sensor device, a sensor management method, and a sensor management program.

### RELATED ART

Owing to recent advances in IoT (Internet of Things) technologies, mechanisms that accumulate various kinds of data, analyze the accumulated data, and feed back the acquired knowledge have begun to be utilized. As a result, the demand for sensing data obtained by sensors and the need for sharing such data are increasing, and the technology for enhancing the distributability of sensing data has been developed more actively.

For example, Patent Document 1 proposes a system for transmitting to a user's application sensing data obtained by a sensor from a sensor management device for managing the sensor. Specifically, the system proposed in Patent Document 1 acquires sensor-side metadata and app-side metadata. The sensor-side metadata is information regarding a sensor that outputs the sensing data. The app-side metadata is information regarding an application that uses the sensing data.

This system extracts sensors that meet a request from the application and can provide sensing data, by matching the sensor-side metadata with the app-side metadata. The system then transmits a data flow control command that specifies a sensor and an application that have been extracted through the matching, to the sensor management device that manages the sensor. Thus, the sensing data obtained by the sensor can be transmitted from the sensor management device that manages the sensor to the user's application.

Also, for example, Patent Document 2 proposes a system that adds, to output data that is output from a sensor, identification information for identifying the output data, type information indicating the type of the output data, format information indicating the format of the output data, or the like. According to this system, the output data can be identified and the type and format of the output data can be specified based on the information added to the output data that is output from the sensor.

### RELATED ART DOCUMENTS

### PATENT DOCUMENTS

Patent Document 1: Japanese Patent No. 5445722
Patent Document 2: JP 2005-242534A

### SUMMARY OF THE INVENTION

### PROBLEM TO BE SOLVED BY THE INVENTION

The inventor of the present application has found the following problems regarding the aforementioned conventional technologies for distributing sensing data. That is to say, the form of use of a sensor may change over time. For example, there is a possibility that the temperature around the sensor, the angle at which the sensor is installed, and the distance between the sensor and an observation target will change in accordance with the situation in which the sensor is installed. Also, if, for example, a sensor is shared by a plurality of users, operation settings of the sensor that one user desires may differ from operation settings of the sensor that other users desire. For this reason, that the operation settings of the sensor employed at two different points in time may differ.

Elements relating to the form of use, such as a situation in which a sensor is installed and operation settings thereof, affect the reliability, availability, or the like, of obtained sensing data, and thus, when this sensing data is used, it is desired to check the form of use of the sensor. However, in the conventional system, it has not been envisioned that the form of use of a sensor may thus change. For this reason, the inventor of the present application has found that, to check the form of use of a sensor when using sensing data, the sensor needs to be accessed, or an inquiry needs to be made to a device that manages the sensor, resulting in the time and effort required for such processing.

One aspect of the present invention has been made in view of the foregoing situation, and aims to provide a technology for reducing the time and effort required to check the form of use of a sensor when using sensing data.

### MEANS FOR SOLVING THE PROBLEMS

To solve the foregoing problems, the invention employs the following configurations.

That is to say, a sensor management unit according to an aspect of the present invention includes: a sensing data acquisition portion configured to acquire sensing data obtained by a sensor observing a target; a metadata generating portion configured to generate dynamic metadata indicating an attribute of the sensor at a point in time when the sensing data is obtained, the attribute relating to a form of use of the sensor that may dynamically change over time; and a metadata managing portion configured to manage the generated dynamic metadata in association with the sensing data.

In this configuration, information regarding the form of use of the sensor at the point in time when the sensing data is obtained is generated as dynamic metadata, and the generated dynamic metadata is managed in association with the sensing data. Thus, by referencing the associated dynamic metadata when using the sensing data, the form of use of the sensor at the point in time when the sensing data to be used is obtained can be checked. Accordingly, this configuration makes it possible to omit processing to access the sensor or make an inquiry to a device that manages the sensor in order to check the form of use of the sensor, and therefore the time and effort required to check the form of use of the sensor when using the sensing data can be reduced.

Note that the type of the sensor need not be specifically limited, and may be selected as appropriate, depending on the embodiment. For example, the sensor may be an image sensor, an infrared sensor, a sound sensor, a light sensor, a pressure sensor, an air pressure sensor, a temperature sensor, or the like. Also, for example, the sensor may be an environmental sensor (air pressure, temperature, humidity sound pressure, sound, ultraviolet rays, illuminance, rainfall, gas etc.), a vital sensor (blood pressure, heart rate, electrocardiogram, body temperature, sleep (microwaves), activity, blood sugar level etc.), an in-vehicle sensor (image sensor, laser sensor, a sleep (microwaves) sensor etc.), a home security sensor (image sensor, infrared sensor, activity (sound) sensor, gas (CO₂ etc.) sensor, a current sensor, a smart meter (a sensor for measuring the amount of electric power consumed by appliances, illumination, or the like) etc.), or the like. Accordingly, sensing data may be image data, numerical data, sound data, language data, or the like, for example. Also, the attribute relating to the form of use of the sensor indicated by the dynamic metadata may be, for example, an attribute relating to operation settings of the sensor, an attribute relating to the situation in which the sensor is installed, or the like. The attribute relating to operation settings of the sensor is, for example, a set value of a measurement range, a set value of the resolution in the measurement range, a set value of a sampling frequency, or the like. The attribute relating to the situation in which the sensor is installed is, for example, the angle at which the sensor is installed, the temperature around the sensor, the distance between the sensor and an observation target, or the like.

In the sensor management unit according to the above aspect, the metadata generating portion may further generate processed metadata relating to a feature value of the sensing data by analyzing the acquired sensing data, and the metadata managing portion may further manage the generated processed metadata in association with the sensing data. According to this configuration, when sensing data is used, the feature value of the sensing data can be specified by referencing the associated processed metadata. For this reason, in a device that uses sensing data, analysis processing for deriving the feature value of the sensing data can be omitted, and a processing load for using the sensing data can be reduced.

Note that the type of analysis processing performed when the processed metadata is generated need not be specifically limited, and may be selected as appropriate, depending on the embodiment. For example, the analysis processing may be labeling processing, calculation processing for deriving the amount of change, calculation processing for deriving a vector value, conversion processing for making the unit, scale, or the like uniform, cleansing processing for removing data other than a true value of the sensing data, filtering processing using a filter such as a LPF (Low Pass Filter), a HPF (High Pass Filter), a BPF (Band Pass Filter), or the like. The feature value obtained as the processed metadata through the analysis indicates a feature of the sensing data. The type of feature value need not be specifically limited as long as it can indicate a feature of the sensing data, and may be selected as appropriate, depending on the embodiment. For example, the feature value may be a label, an amount of change, a vector value, an outlier value, or the like.

In the sensor management unit according to the above aspect, the metadata generating portion may further generate static metadata indicating an attribute relating to specifications of the sensor that do not change over time, and the metadata managing portion may further manage the generated static metadata in association with the sensing data. In this configuration, the static metadata indicating the specifications of the sensor is associated with the sensing data. For this reason, the sensing data can be searched for based on the specifications of the sensor. Accordingly, the searchability of sensing data can be enhanced.

Note that the attribute relating to the specifications of the sensor indicated by the static metadata may include, for example, an attribute relating to performance of the sensor, an attribute relating to device information regarding the sensor, an attribute relating to an initial installation condition of the sensor, or the like. The attribute relating to performance of the sensor may include, for example, the sensitivity limit, the dynamic range, the settable range of spatial resolution, the settable range of sampling frequency, or the like, of the sensor. The attribute relating to device information regarding the sensor may include, for example, the name of the sensor, a description of the sensor, or the like. The attribute relating to an initial installation condition of the sensor may include, for example, information such as a proper noun indicating the location where the sensor is installed.

The sensor management unit according to the above aspect may further include a first communicating portion configured to transmit the sensing data to an external device, and a second communicating portion configured to transmit the dynamic metadata to the external device. The first communicating portion may communicate with the external device via a first communication port, and the second communicating portion may communicate with the external device via a second communication port different from the first communication port. According to this configuration, the communication load for transmitting the sensing data and the dynamic metadata can be distributed.

In the sensor management unit according to the above aspect, the metadata generating portion may generate the dynamic metadata based on sensing data obtained by a sub-sensor observing a form of use of the sensor. According to this configuration, the dynamic metadata can be generated appropriately. Note that the type of sub-sensor need not be specifically limited as long as the form of use of the sensor can be observed with it, and may be selected as appropriate, depending on the embodiment. For example, the sub-sensor may be a temperature sensor, a GPS (Global Positioning System) sensor, an acceleration sensor, an air pressure sensor, a magnetic field sensor, a gyro sensor, or the like.

In the sensor management unit according to the above aspect, the sensing data acquisition portion may acquire the sensing data by processing a signal output from the sensor. According to this configuration, the sensing data can be acquired as appropriate. Note that the method for processing the signal output from the sensor need not be specifically limited, and may be selected as appropriate, depending on the embodiment.

A sensor device according to an aspect of the present invention includes the sensor management unit according to any of the above-described modes, and the sensor. According to this configuration, a sensor device can be provided that outputs the sensing data obtained by observing a target such that the time and effort required to check the form of use of the sensor can be reduced.

Note that another mode of the sensor management unit according to the above modes may be an information processing method for realizing the above-described configurations, a program, or a storage medium that includes this program stored therein and can be read by a computer or other devices, machines, or the like. Here, a storage medium that can be read by a computer or the like is a medium in which information such as a program is accumulated by means of an electric, magnetic, optical, mechanical, or chemical action.

For example, a sensor management method according to an aspect of the present invention is a computer-implemented sensor management method including: a step of acquiring sensing data obtained by a sensor observing a target; a step of generating dynamic metadata indicating an attribute of the sensor at a point in time when the sensing data is obtained, the attribute relating to a form of use of the sensor that may dynamically change over time; and a step of associating the generated dynamic metadata with the sensing data.

Also, for example, a sensor management program according to an aspect of the present invention is a sensor management program for causing a computer to carry out: a step of acquiring sensing data obtained by a sensor observing a target; a step of generating dynamic metadata indicating an attribute of the sensor at a point in time when the sensing data is obtained, the attribute relating to a form of use of the sensor that may dynamically change over time; and a step of associating the generated dynamic metadata with the sensing data.

### EFFECTS OF THE INVENTION

According to the present invention, it is possible to provide a technology for reducing the time and effort required to check the form of use of a sensor when using sensing data.

### BRIEF DESCRIPTION OF THE DRAWINGS

- Fig. 1: schematically shows an example of a scenario to which the present invention is applied.
- Fig. 2: schematically shows an example of a hardware configuration of a sensor management unit according to an embodiment.
- Fig. 3: schematically shows an example of a hardware configuration of a network server according to the embodiment.
- Fig. 4: schematically shows an example of a hardware configuration of a user terminal according to the embodiment.
- Fig. 5: schematically shows an example of a software configuration of the sensor management unit according to the embodiment.
- Fig. 6: shows an example of a processing procedure for matching a provider of sensing data with a user thereof according to the embodiment.
- Fig. 7A: schematically shows an example of a provider data catalog according to the embodiment.
- Fig. 7B: schematically shows an example of a user data catalog according to the embodiment.
- Fig. 8: shows an example of a processing procedure performed by the sensor management unit according to the embodiment.
- Fig. 9: shows an example of processes to manage sensing data performed by the sensor management unit according to the embodiment.
- Fig. 10: schematically shows an example of setting data according to the embodiment.
- Fig. 11: schematically shows a correspondence relationship between (first) sensing data and various types of metadata according to the embodiment.
- Fig. 12: schematically shows an example of management data according to the embodiment.

### EMBODIMENTS OF THE INVENTION

Hereinafter, an embodiment according to one aspect of the invention (hereinafter referred to also as "this embodiment") will be described with reference to the drawings. However, this embodiment described below is merely an example of the invention in all respects. Needless to say, various improvements and modifications can be made within the scope of the invention. That is to say, when the present invention is carried out, a specific configuration appropriate for an embodiment may also be employed as appropriate. Note that, although in this embodiment data is described using natural language, more specifically, the data is in the form of quasi-language, commands, parameters, machine language, or the like that can be recognized by a computer.

### § 1 Example Application

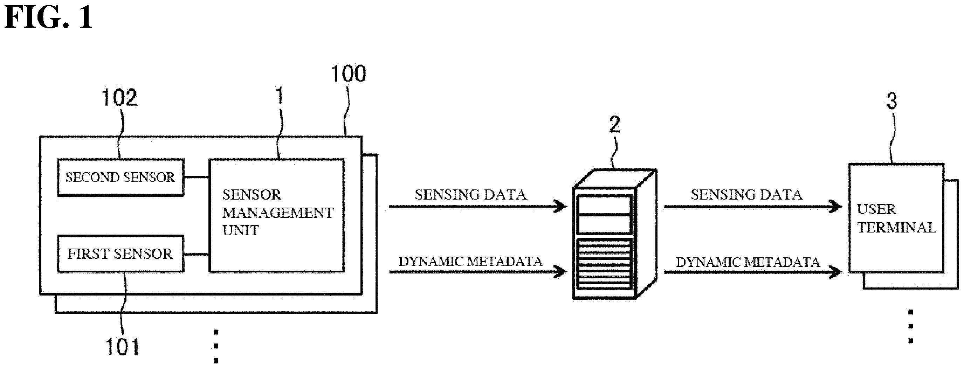

First, an example of a scenario to which the present invention is applied will be described with reference to Fig. 1. Fig. 1 schematically shows an example of a scenario in which a sensor device 100 is used according to this embodiment. In the example shown in Fig. 1, the sensor device 100 according to this embodiment is used as a provider that provides sensing data to a user terminal 3 of a user. However, the method for using the sensor device 100 according to this embodiment is not limited to this example, and may be decided as appropriate, depending on the embodiment.

The sensor device 100 according to this embodiment includes a first sensor 101 for observing a target, a second sensor 102 for observing the form of use of the first sensor 101, and a sensor management unit 1 that is connected to the sensors (101, 102). The first sensor 101 is an example of a "sensor" of the present invention, and the second sensor 102 is an example of a "sub-sensor" of the present invention. The type of sensors (101, 102) may be selected as appropriate in accordance with an observation target.

The sensor management unit 1 according to this embodiment is an information processing apparatus that is configured to manage sensing data (later-described first sensing data 121) obtained by the first sensor 101. Specifically, the sensor management unit 1 acquires sensing data obtained by the first sensor 101 observing a target. Next, the sensor management unit 1 generates dynamic metadata (later-described dynamic metadata 124), which is an attribute of the first sensor 101 at the point in time when the sensing data was obtained, the attribute relating to a form of use of the first sensor 101 that may dynamically change over time.

The attribute relating to the form of use of the first sensor 101 indicated by the dynamic metadata is, for example, an attribute relating to operation settings of the first sensor 101, an attribute relating to the situation in which the first sensor 101 is installed, or the like. Information held as the dynamic metadata concerns attributes that do not necessarily always take a constant value and that may change in accordance with the form of use. That is to say, the dynamic metadata indicates information representing an attribute that may be an attribute where a change is to be checked (or tracked) regarding the form of use of the first sensor 101, in order to judge the reliability, availability, or the like, of the sensing data, for example.

The sensor management unit 1 according to this embodiment generates the aforementioned dynamic metadata as appropriate. In this embodiment, the form of use of the first sensor 101 is monitored by the second sensor 102. As a method for generating the dynamic metadata, the sensor management unit 1 according to this embodiment generates the dynamic metadata based on sensing data (later-described second sensing data 122) obtained by the second sensor 102 observing the form of use of the first sensor 101. The sensor management unit 1 manages the generated dynamic metadata in association with the sensing data.

In this embodiment, the sensing data with which dynamic metadata is associated is provided from the sensor device 100 via a network server 2 to the user terminal 3 of the user. Specifically, a plurality of sensor devices 100 and a plurality of user terminals 3 are connected via a network (not shown) to the network server 2. The type of the network may be selected, as appropriate, from the Internet, a wireless communication network, a mobile communication network, a telephone network, a dedicated network, or the like, for example.

The network server 2 matches providers (sensor devices 100) that provide sensing data with a user (application software executed in the user terminal 3 etc.) using a later-described method, and extracts providers capable of providing sensing data that meets a request from the user. Then, the network server 2 permits distribution of the sensing data from the sensor devices 100 to any matching user terminal 3. Thus, in this embodiment, the sensing data and the metadata are provided from the sensor devices 100 to an appropriate user terminal 3.

As described above, the sensor management unit 1 according to this embodiment generates, as the dynamic metadata, information regarding the form of use of the first sensor 101 at the point in time when the sensing data is obtained, and manages the generated dynamic metadata in association with this sensing data. For this reason, the sensor management unit 1 can provide, together with sensing data obtained by the first sensor 101, the dynamic metadata indicating information regarding the form of use of the first sensor 101 at the point in time when the sensing data is obtained, to the user terminal 3.

With this configuration, the user terminal 3 can check, when using sensing data, the form of use of the first sensor 101 at the point in time when the sensing data to be used is obtained, by referencing the associated dynamic metadata. That is to say, the user terminal 3 can omit processing to access the first sensor 101 or make an inquiry to the sensor management unit 1 that manages the first sensor 101, for example, in order to check the form of use of the first sensor 101. Accordingly, according to this embodiment, the time and effort required to check the form of use of the first sensor 101 can be reduced when using the sensing data.

### §2 Example Configuration

### Hardware Configuration

### Sensor Management Unit (Sensor Device)

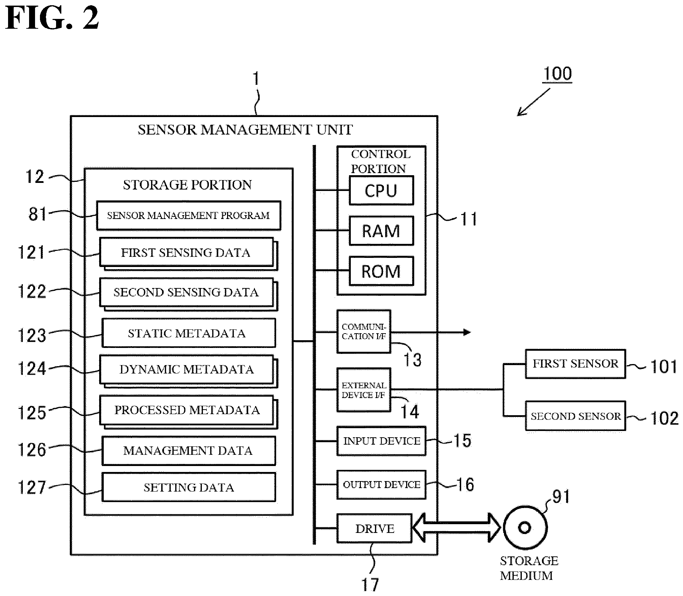

Next, an example of a hardware configuration of the sensor management unit 1 according to this embodiment will be described with reference to Fig. 2. Fig. 2 schematically shows an example of the hardware configuration of the sensor management unit 1 according to this embodiment.

As shown in Fig. 2, the sensor management unit 1 according to this embodiment is a computer in which a control portion 11, a storage portion 12, a communication interface 13, an external device interface 14, an input device 15, an output device 16, and a drive 17 are electrically connected to each other. Note that, in Fig. 2, the communication interface and the external device interface are denoted as "communication I/F" and "external device I/F", respectively.

The control portion 11 includes a CPU (Central Processing Unit), which is a hardware processor, a RAM (Random Access Memory), a ROM (Read Only Memory), and so on, and is configured to perform information processing based on programs and various data. The storage portion 12 is an example of a "memory", and is constituted by a hard disk drive, a solid-state drive, or the like, for example. In this embodiment, a sensor management program 81, first sensing data 121, second sensing data 122, static metadata 123, dynamic metadata 124, processed metadata 125, management data 126, setting data 127, and so on, are stored in the storage portion 12.

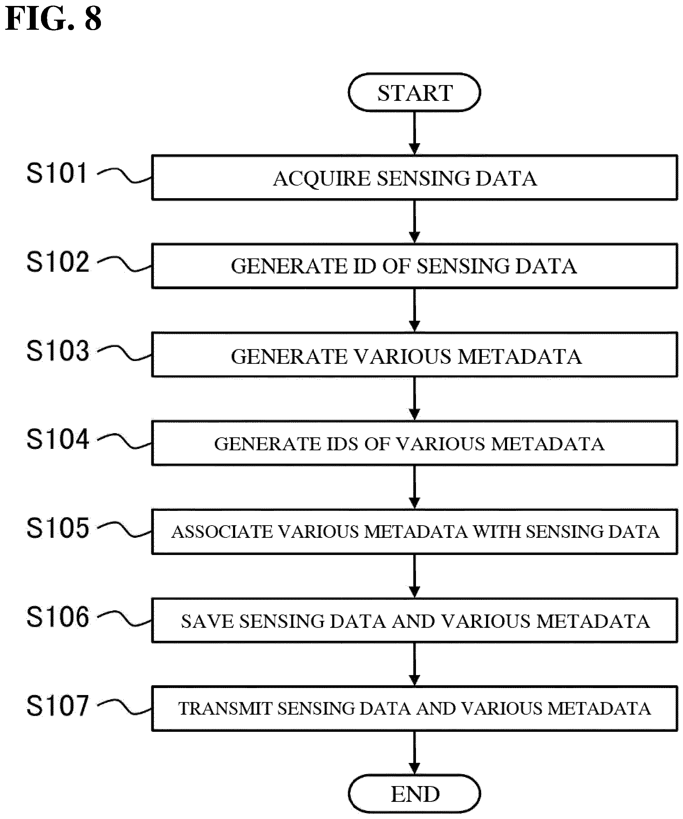

The first sensing data 121 is obtained by the first sensor 101 observing a target. The second sensing data 122 is obtained by the second sensor 102 observing the form of use of the first sensor 101. The metadata 123 to 125 relates to the first sensor 101, and is associated with the first sensing data 121. The management data 126 includes information indicating a correspondence relationship between the first sensing data 121 and the metadata 123 to 125 based on the association. The setting data 127 includes information indicating operation settings of the first sensor 101. The sensor management program 81 includes a command to cause the sensor management unit 1 to perform later-described information processing (Fig. 8) for managing the first sensing data 121 and the metadata 123 to 125. The details will be described later.

The communication interface 13 is, for example, a wired LAN (Local Area Network) module, a wireless LAN module, or the like, and is an interface for performing wired or wireless communication via a network. The sensor management unit 1 communicates data with the network server 2 via this communication interface 13.

The external device interface 14 is, for example, a USB (Universal Serial Bus) port, a dedicated port, or the like, and is an interface for connecting to an external device. The type and number of external device interfaces 14 may be selected as appropriate in accordance with the type and number of external devices to be connected. In this embodiment, the sensor management unit 1 is connected to the sensors (101, 102) via the external device interface 14.

The type of the first sensor 101 need not be specifically limited, and may be selected as appropriate, depending on the embodiment. The first sensor 101 may be, for example, an image sensor, an infrared sensor, a sound sensor, a light sensor, a pressure sensor, an air pressure sensor, a temperature sensor, or the like. Also, the first sensor 101 may be, for example, an environmental sensor, a vital sensor, an in-vehicle sensor, a home security sensor, or the like. An environmental sensor is a sensor configured to measure or detect environmental information regarding air pressure, temperature, humidity, sound pressure, sound, ultraviolet rays, illuminance, rainfall, gas, or the like. A vital sensor is a sensor configured to measure or detect vital information, such as blood pressure, heart rate, electrocardiogram, body temperature, sleeping state (microwaves), activity, and blood sugar level. An in-vehicle sensor is a sensor mounted in a vehicle, such as an image sensor, a laser sensor, or a sleep (microwaves) sensor. A home security sensor is a sensor configured to measure or detect information regarding home security, such as an image sensor, an infrared sensor, an activity (sound) sensor, a gas (CO2 etc.) sensor, a current sensor, or a smart meter (a sensor for measuring the amount of electric power consumed by appliances, illumination, or the like). Accordingly, the first sensing data 121 obtained by the first sensor 101 is, for example, image data, numerical data, sound data, language data, or the like. The first sensor 101 is arranged as appropriate so as to be able to measure the state of a target.

The type of the second sensor 102 need not be specifically limited as long as it can observe the form of use of the first sensor 101, and may be selected as appropriate, depending on the embodiment. The second sensor 102 may be, for example, a temperature sensor, a GPS sensor, an acceleration sensor, an air pressure sensor, a magnetic field sensor, a gyro sensor, or the like. This second sensor 102 is arranged as appropriate so as to be able to observe the form of use of the first sensor 101. For example, if a temperature sensor is employed as the second sensor 102, the temperature around the first sensor 101 can be observed by the second sensor 102 by arranging the second sensor 102 near the first sensor 101. Also, if, for example, a gyro sensor is employed as the second sensor 102, the orientation (e.g. direction) of the first sensor 101 can be observed by the second sensor 102 by attaching the second sensor 102 to a housing (not shown) of the first sensor 101.

Note that, in the example in Fig. 2, one first sensor 101 and one second sensor 102 are connected to the sensor management unit 1. However, the number of first sensors 101 and second sensors 102 to be connected to the sensor management unit 1 need not be limited to one, and may alternatively be two or more. A plurality of first sensors 101 may be connected to the sensor management unit 1. Also, a plurality of second sensors 102 may also be used to observe the form of use of one first sensor 101. The number of sensors (101, 102) to be connected to the sensor management unit 1 may be decided as appropriate, depending on the embodiment.

The input device 15 is, for example, a device for making input, such as a mouse or a keyboard. The output device 16 is, for example, a device for making output, such as a display or a speaker. The user who is to provide sensing data can operate the sensor management unit 1 using the input device 15 and the output device 16.

The drive 17 is, for example, a CD drive, a DVD drive, or the like, and is a drive device for loading a program stored in a storage medium 91. The type of the drive 17 may be selected as appropriate, depending on the type of the storage medium 91. The aforementioned sensor management program 81 may also be stored in this storage medium 91.

The storage medium 91 is a medium for accumulating information such as a program by means of an electric, magnetic, optical, mechanical, or chemical action, such that computers, or other devices, machines, or the like can read the recorded information such as a program. The sensor management unit 1 may acquire the sensor management program 81 from this storage medium 91.

Here, Fig. 2 shows a disk-type storage medium such as a CD or a DVD as an example of the storage medium 91. However, the type of the storage medium 91 is not limited to the disk type, and may also be another type than the disk type. Examples of a storage medium of a type other than the disk type may include a semiconductor memory, such as a flash memory.

Note that, as for the specific hardware configuration of the sensor management unit 1, constituent elements may be omitted, replaced, or added as appropriate, depending on the embodiment. For example, the control portion 11 may also include a plurality of hardware processors. The hardware processor may be constituted by a microprocessor, an FPGA (field-programmable gate array), a DSP (digital signal processor), or the like. The storage portion 12 may be constituted by a RAM and a ROM included in the control portion 11. The input device 15 and the output device 16 may be omitted. If each of the sensors (101, 102) includes a communication interface, the sensor management unit 1 may be connected to the sensors (101, 102) via the communication interface 13, rather than the external device interface 14. In this case, the external device interface 14 may be omitted. Although, in Fig. 2, the sensor management unit 1 is constituted by one information processing apparatus, the sensor management unit 1 may be constituted by a plurality of information processing apparatuses. If the sensor management unit 1 is constituted by a plurality of information processing apparatuses, the hardware configuration of each of the information processing apparatuses may, but need not, coincide with each other. The sensor management unit 1 may be an information processing apparatus designed exclusively for providing service, or may also be a general-purpose desktop PC (personal computer), a tablet PC, a smartphone, a mobile phone other than a smartphone, a PLC (programmable logic controller), or the like.

### Network Server

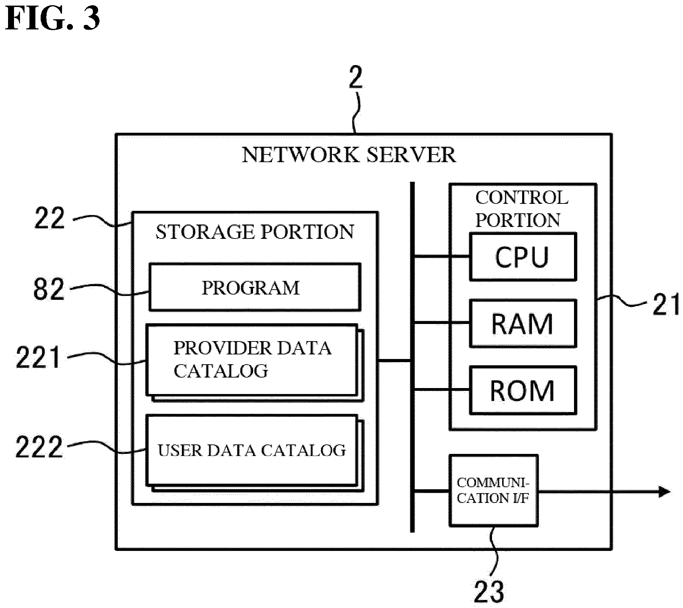

Next, an example of a hardware configuration of the network server 2 according to this embodiment will be described with reference to Fig. 3. Fig. 3 schematically shows an example of the hardware configuration of the network server 2 according to this embodiment.

As shown in Fig. 3, the network server 2 according to this embodiment is a computer in which a control portion 21, a storage portion 22, and a communication interface 23 are electrically connected to each other. Note that, in Fig. 3, the communication interface is denoted as "communication I/F", similarly to Fig. 2.

The control portion 21 includes a CPU, which is a hardware processor, as well as a RAM, a ROM, and so on, similarly to the aforementioned control portion 11, and is configured to perform various kinds of information processing based on programs and data. The storage portion 22 is constituted by a hard disk drive, a solid-state drive, or the like, for example, and stores a program 82, a provider data catalog 221, a user data catalog 222, and so on.

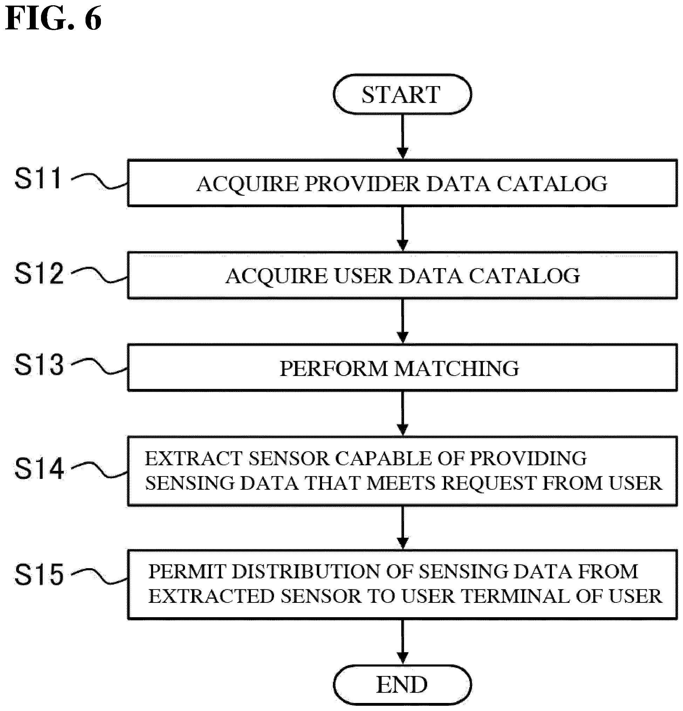

The program 82 includes a command to cause the network server 2 to perform later-described information processing (Fig. 6) for matching a provider and a user. The provider data catalog 221 is prepared for each provider, and includes information indicating sensing data (first sensing data 121) that can be provided by a sensor (first sensor 101) in each sensor device 100. Meanwhile, the user data catalog 222 is prepared for each user, and includes information indicating sensing data desired by the user. The provider data catalog 221 and the user data catalog 222 are used in matching between a provider and a user. The details will be described later.

The communication interface 23 is an interface for performing communication via a network, similarly to the aforementioned communication interface 13. The communication interface 23 is a wired LAN module, a wireless LAN module, or the like, for example. The network server 2 performs data communication with sensor devices 100 and user terminals 3 via this communication interface 23.

Note that, as for the specific hardware configuration of the network server 2, constituent elements may be omitted, replaced, or added as appropriate, depending on the embodiment. For example, the control portion 21 may include a plurality of hardware processors. The hardware processor may be constituted by a microprocessor, an FPGA, or the like. The storage portion 22 may be constituted by a RAM and a ROM included in the control portion 21. The network server 2 may further include an input device and an output device as user interfaces. Also, the network server 2 may be an information processing apparatus designed exclusively for the service, or may also be a general-purpose server device, a general-purpose PC, or the like.

### User Terminal

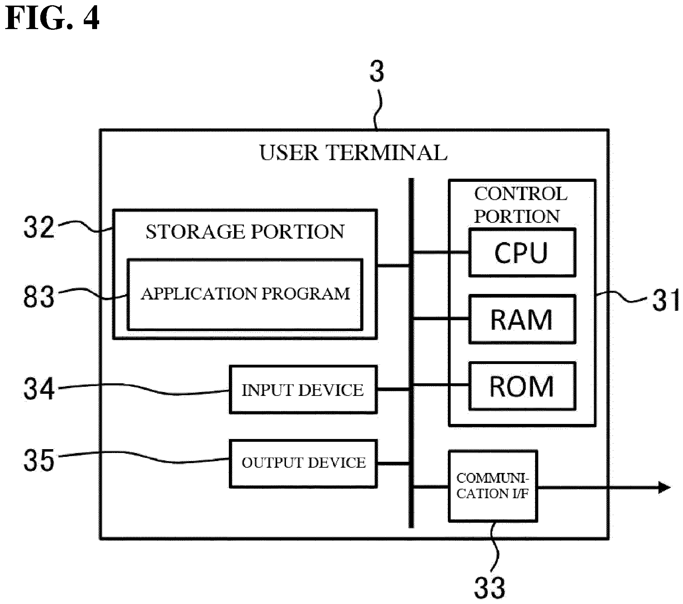

Next, an example of a hardware configuration of the user terminal 3 according to this embodiment will be described with reference to Fig. 4. Fig. 4 schematically shows an example of the hardware configuration of a user terminal 3 according to this embodiment.

As shown in Fig. 4, the user terminal 3 according to this embodiment is a computer in which a control portion 31, a storage portion 32, a communication interface 33, an input device 34, and an output device 35 are electrically connected to each other. Note that, in Fig. 4, the communication interface is denoted as "communication I/F", similarly to Figs. 2 and 3.

The control portion 31 includes a CPU, which is a hardware processor, as well as a RAM, a ROM, and so on, similarly to the aforementioned control portions (11, 22), and is configured to perform various kinds of information processing based on programs and data. The storage portion 32 is constituted by a hard disk drive, a solid-state drive, or the like, for example, and stores an application program 83, and the like.

The application program 83 includes a command for causing the control portion 31 to perform predetermined information processing, and uses sensing data (first sensing data 121) provided by each user terminal 3. The type of the application program 83 need not be specifically limited, and may be selected as appropriate, depending on the embodiment.

The communication interface 33 is an interface for performing communication via a network, similarly to the aforementioned communication interfaces (13, 23). The communication interface 33 is a wired LAN module, a wireless LAN module, or the like, for example. The user terminal 3 communicates data with the network server 2 via this communication interface 33.

The input device 34 is, for example, a device for making input, such as a mouse or a keyboard, similarly to the aforementioned input device 15. The output device 35 is, for example, a device for making output, such as a display or a speaker, similarly to the aforementioned output device 16. The user of sensing data can operate the user terminal 3 using the input device 34 and the output device 35.

Note that, as for the specific hardware configuration of the user terminal 3, constituent elements may be omitted, replaced, or added as appropriate, depending on the embodiment. For example, the control portion 31 may also include a plurality of hardware processors. The hardware processor may be constituted by a microprocessor, an FPGA, or the like. The storage portion 32 may be constituted by a RAM and a ROM included in the control portion 31. The user terminal 3 may be an information processing apparatus designed exclusively for the service, or may also be a general-purpose desktop PC, a tablet PC, a smartphone, a mobile phone other than a smartphone, or the like.

### Software Configuration

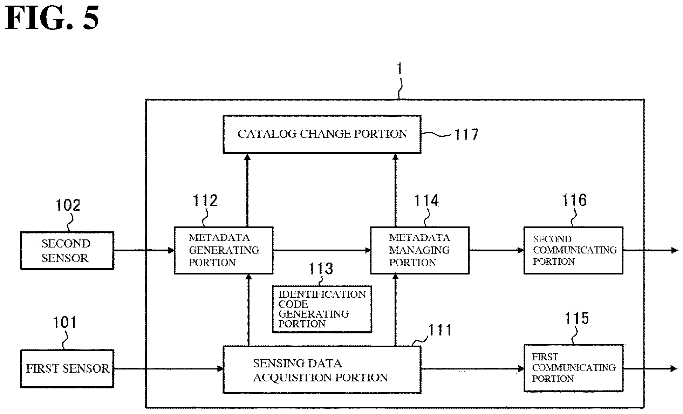

Next, an example of a software configuration of the sensor management unit 1 according to this embodiment will be described with reference to Fig. 5. Fig. 5 schematically shows an example of the software configuration of the sensor management unit 1 according to this embodiment.

The control portion 11 of the sensor management unit 1 loads the sensor management program 81 stored in the storage portion 12 to the RAM. The control portion 11 then causes the CPU to interpret the sensor management program 81 loaded to the RAM, and performs information processing based on the interpretation while controlling the constituent elements. As a result, as shown in Fig. 5, the sensor management unit 1 according to this embodiment is configured as a computer that includes, as software modules, the sensing data acquisition portion 111, a metadata generating portion 112, an identification code generating portion 113, a metadata managing portion 114, a first communicating portion 115, a second communicating portion 116, and a catalog change portion 117.

The sensing data acquisition portion 111 acquires the first sensing data 121 obtained by the first sensor 101 observing a target. The metadata generating portion 112 generates dynamic metadata 124 indicating an attribute of the first sensor 101 at the point in time when the first sensing data 121 is obtained, the attribute relating to the form of use of the first sensor 101 that may dynamically change over time. In this embodiment, the metadata generating portion 112 generates the dynamic metadata 124 based on, for example, the second sensing data 122 obtained by the second sensor 102 observing the form of use of the first sensor 101.

Furthermore, in this embodiment, the metadata generating portion 112 generates static metadata 123 and processed metadata 125, in addition to the dynamic metadata 124. The static metadata 123 indicates an attribute relating to the specifications of the first sensor 101 that do not change over time. That is to say, information held as the static metadata 123 basically relates to an attribute that always takes a constant value and will not change in accordance with the form of use. The processed metadata 125 relates to a feature value of the acquired first sensing data 121, and is generated by analyzing the acquired first sensing data 121.

The identification code generating portion 113 generates first identification codes (later-described sensing data IDs) for identifying the first sensing data 121, and second identification codes (later-described static metadata IDs, dynamic metadata IDs, and processed metadata IDs) for identifying the metadata 123 to 125. The metadata managing portion 114 manages the generated metadata 123 to 125 in association with the first sensing data 121.

The first communicating portion 115 transmits the first sensing data 121 to an external device, such as the user terminal 3. Meanwhile, the second communicating portion 116 transmits the metadata 123 to 125 to the external device. The catalog change portion 117 changes the content of the provider data catalog 221 held in the network server 2, in accordance with a change in the form of use of the first sensor 101.

The software modules of the sensor management unit 1 will be described in detail in an example operation, which will be described later. Note that this embodiment describes an example in which all of the software modules of the sensor management unit 1 are realized by a general-purpose CPU. However, the method for realizing the software modules need not be limited to this example. Some or all of the aforementioned software modules may be realized by one or more dedicated processors. As for the software configuration of the sensor management unit 1, software modules may be omitted, replaced, or added as appropriate, depending on the embodiment.

### §3 Example Operation

### Matching Processing

Next, a processing procedure relating to matching between a provider and a user performed by the network server 2 will be described with reference to Fig. 6. Fig. 6 shows an example of a matching processing procedure performed by the network server 2 according to this embodiment. However the matching processing procedure described below is merely an example, and the processes may be modified to the extent possible. As for the processing procedure described below, steps may be omitted, replaced, and added as appropriate, depending on the embodiment.

### Steps S11 and S12

First, in step S11, the control portion 21 of the network server 2 acquires the provider data catalog 221 indicating the sensing data that can be provided by the sensor devices 100. In the next step S12, the control portion 21 acquires the user data catalog 222 indicating the sensing data desired by a user.

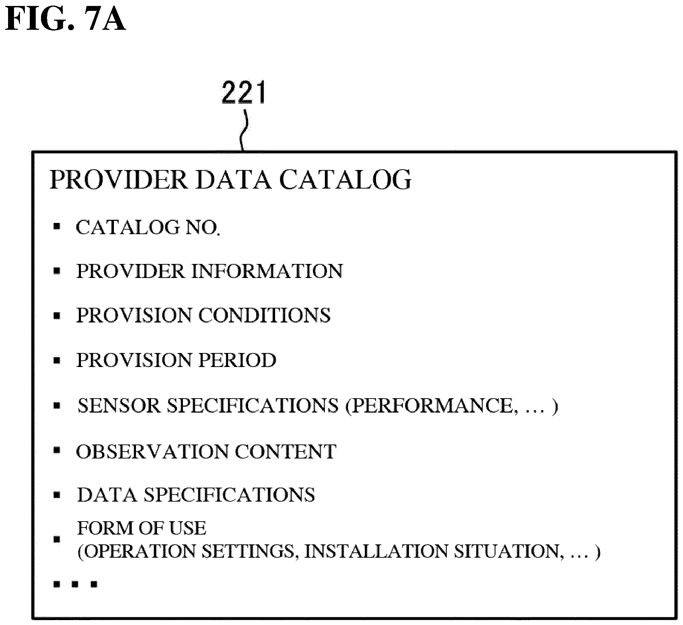

Fig. 7A schematically shows an example of the provider data catalog 221 according to this embodiment. The provider data catalog 221 according to this embodiment includes information such as the catalog number, provider information, provision conditions, the provision period, sensor specifications, observation content, data specifications, and the form of use. In step S11, the control portion 21 may generate the provider data catalog 221, as appropriate, by acquiring various kinds of information that is to be registered in the provider data catalog 221.

Specifically, the catalog number is a number for identifying the provider data catalog 221. When generating the provider data catalog 221, the control portion 21 may also generate, as appropriate, a number that is not used for other provider data catalogs 221, and set the generated number as the catalog number.

The provider information is information for specifying a provider of the sensing data, and may include the name (personal name or organization name) of the provider, a contact address of the provider, or the like, for example. Information representing the provision conditions provides conditions under which provision of the sensing data is permitted. The provision conditions may include, for example, conditions regarding the usage (commercial/non-commercial/unlimited) of the sensing data, the scope of provision (allowed/not allowed to be provided to a third party), access right (copy not permitted/copy permitted/alteration permitted/manipulation permitted), whether or not personal information is contained, whether or not anonymously processed information is contained, the type of payment of usage charge for the sensing data, or the like. Information representing the provision period provides a period during which provision of the sensing data is permitted (e.g. start date and end date of provision). When generating the provider data catalog 221, the control portion 21 may also acquire information representing provider information, provision conditions, and the provision period by accepting input or designation thereof from the provider via each sensor device 100 or other information processing apparatuses.

Information representing sensor specifications indicates an attribute relating to the specifications of the first sensor 101, and may include, for example, information regarding performance of the first sensor 101, device information, information regarding initial installation conditions, or the like. Information regarding performance of the first sensor 101 may include, for example, information such as the sensitivity limit, the dynamic range, the settable range of spatial resolution, and the settable range of sampling frequency, of the first sensor 101. The device information regarding the first sensor 101 may include, for example, information such as the name of the first sensor 101 and a description of the first sensor 101. Information regarding the initial installation conditions of the first sensor 101 may include, for example, information such as a proper noun indicating the location where the first sensor 101 is installed.

Information regarding the observation content indicates an attribute of observation performed using the first sensor 101, and may include, for example, the name of observation (e.g. environmental observation), a description of the observation, the name of an observation target (e.g. office A), a description of the observation target, the name of an observation index (e.g. temperature, humidity etc.), a description of the observation index, or the like. Information representing data specifications indicates an attribute regarding the specifications of the first sensing data 121 obtained by the first sensor 101, and may include, for example, information such as the name (temperature value, maximum power consumption value etc.) of an observation value indicated by the first sensing data 121, a description of the observation value, and the unit of the observation value. When generating the provider data catalog 221, the control portion 21 may also acquire information representing sensor specifications, the observation content, and data specifications from the static metadata 123 associated with the first sensors 101 of each sensor devices 100 or the first sensing data 121.

Information regarding the form of use indicates an attribute of the first sensor 101 that may change in accordance with the form of use, and may include, for example, information regarding operation settings of the first sensor 101 and information regarding the situation in which the first sensor 101 is installed. Information regarding operation settings of the first sensor 101 may include, for example, information such as a set value of the measurement range of the first sensor 101, a set value of the resolution in the measurement range, and a set value of the sampling frequency. Information regarding the situation in which the first sensor 101 is installed may include, for example, information such as the angle at which the first sensor 101 is installed, the temperature around the first sensor 101, and the distance between the first sensor 101 and an observation target. When generating the provider data catalog 221, the control portion 21 may also acquire information regarding the form of use from the dynamic metadata 124 associated with each sensor device 100 or the first sensing data 121.

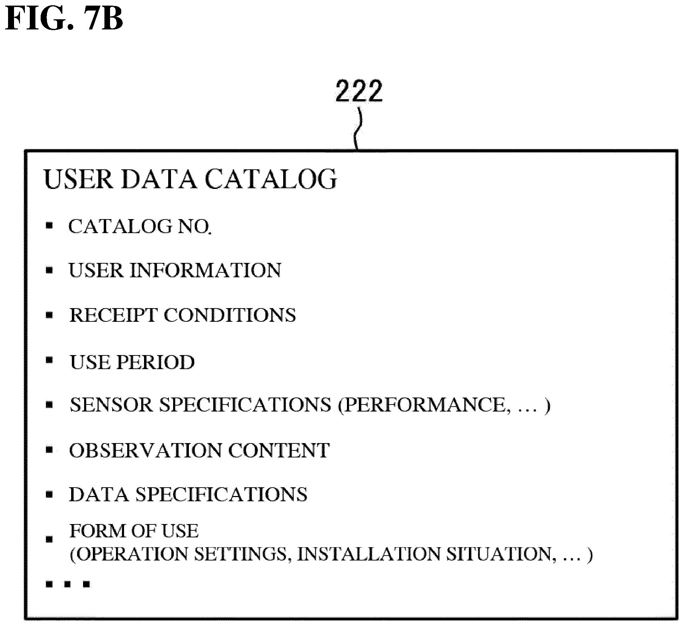

Meanwhile, Fig. 7B schematically shows an example of the user data catalog 222 according to this embodiment. The user data catalog 222 according to this embodiment includes information such as the catalog number, user information, receipt conditions, the use period, sensor specifications, observation content, data specifications, and the form of use. In step S12, the control portion 21 may also generate the user data catalog 222, as appropriate, by accepting input or designation thereof from the user via each user terminal 3 or another information processing apparatus and acquiring various kinds of information to be registered in the user data catalog 222.

The catalog number is akin to the catalog number in the provider data catalog 221. Information representing user information, receipt conditions, the use period, sensor specifications, observation content, data specifications, and the form of use correspond to information representing provider information, provision conditions, the provision period, sensor specifications, observation content, data specifications, and the form of use in the aforementioned provider data catalog 221, respectively.

The user information is information for specifying the user of the sensing data. Information representing receipt conditions provides various conditions under which provision of the sensing data is permitted. Information representing the use period provides a period during which the sensing data is to be provided or provision of the sensing data is desired (e.g. start date and end date of use). Information representing sensor specifications indicates an attribute of the specifications of the sensor from which provision of the sensing data is desired. Information regarding the observation content indicates an attribute of observation regarding which provision of the sensing data is desired. Information representing data specifications indicates an attribute relating to the specifications of the sensing data the provision of which is desired. Information regarding the form of use indicates an attribute that may change in accordance with the form of use of the sensor from which provision of the sensing data is desired. Items provided by the information representing user information, receipt conditions, the use period, sensor specifications, observation content, data specifications, and the form of use may be similar to the information representing provider information, provision conditions, the provision period, sensor specifications, observation content, data specifications, and the form of use, respectively, in the aforementioned provider data catalog 221.

Note that the provider data catalog 221 and the user data catalog 222 need not be generated by the network server 2. The provider data catalog 221 may alternatively be generated by each sensor device 100 or another information processing apparatus of a provider. The user data catalog 222 may alternatively be generated by each user terminal 3 or another information processing apparatus of a user. In this case, the control portion 21 may also acquire the provider data catalog 221 via a network from each sensor device 100 or the other information processing apparatus of the provider. Also, the control portion 21 may acquire the user data catalog 222 via a network from each user terminal 3 or the other information processing apparatus of the user.

### Steps S13 and S14

In the next step S13, the control portion 21 matches providers with users by checking the items in the provider data catalog 221 against the items in the user data catalog 222. In the next step S14, a sensor device 100 (first sensor 101) capable of providing sensing data (first sensing data 121) that meets the request from the user is extracted based on the matching result.

As an example of a matching method, the control portion 21 checks the provision conditions, the provision period, sensor specifications, observation content, data specifications, and the form of use in the provider data catalog 221 against the receipt conditions, the use period, sensor specifications, observation content, data specifications, and the form of use in the user data catalog 222, and determines whether or not corresponding items match. If, as a result of the determination, all or some of the items match, the control portion 21 extracts the sensor device 100 corresponding to the provider data catalog 221 as a sensor device capable of providing sensing data that meets the request from the user corresponding to the user data catalog 222. On the other hand, if not, the control portion 21 determines that the sensor device 100 corresponding to the provider data catalog 221 is not a sensor device capable of providing sensing data that meets the request from the user corresponding to the user data catalog 222. However, the matching method need not be limited to this example, and may be decided as appropriate, depending on the embodiment.

### Step S15

In the next step S15, the control portion 21 permits distribution of the sensing data (first sensing data 121) from the extracted sensor device 100 to the target user terminal 3. As an example of this permission processing, the control portion 21 transmits, to the extracted sensor device 100, a data flow permission command indicating that transmission of sensing data to the target user terminal 3 is permitted. In response to this, the sensor device 100 starts to transmit the first sensing data 121 obtained by the first sensor 101 observing the target, to the target user terminal 3 designated by the data flow permission command. Upon permission of data distribution to the extracted sensor devices 100 being completed, the control portion 21 ends the matching processing according to this example operation.

### Processing for Managing Sensing Data

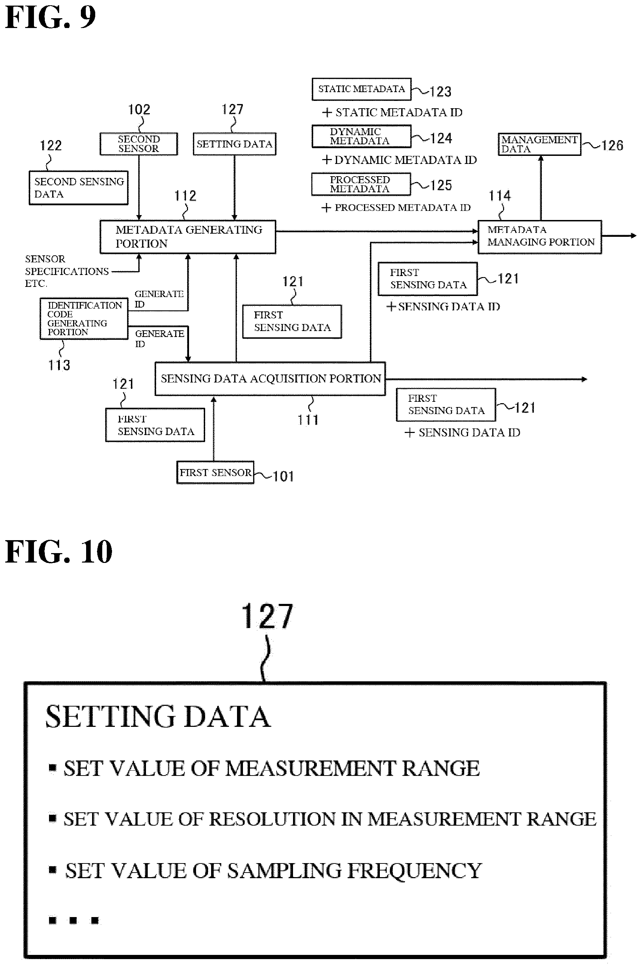

Next, a description will be given, with reference to Figs. 8 and 9, of a processing procedure for managing the first sensing data 121 performed by the sensor management unit 1. Fig. 8 shows an example of a processing procedure for managing the first sensing data 121 performed by the sensor management unit 1 according to this embodiment. Fig. 9 schematically shows an example of a process by which the first sensing data 121 is managed by the sensor management unit 1 according to this embodiment. The processing procedure described below is an example of a "sensor management method" of the present invention. However, the processing procedure described below is merely an example, and the processes may be modified to the extent possible. As for the processing procedure described below, steps may be omitted, replaced, and added as appropriate, depending on the embodiment.

### Step S101

First, in step S101, the control portion 11 of the sensor management unit 1 operates as the sensing data acquisition portion 111, and acquires the first sensing data 121 obtained by the first sensor 101 observing a target.

In this embodiment, the sensor management unit 1 holds the setting data 127 indicating operation settings of the first sensor 101. Thus, the control portion 11 references the setting data 127 and specifies the operation settings of the first sensor 101.

Fig. 10 schematically shows an example of the setting data 127 according to this embodiment. The setting data 127 includes, as information representing the operation setting of the first sensor 101, information such as a set value of the measurement range, a set value of the resolution in the measurement range, and a set value of the sampling frequency, for example. The control portion 11 controls operations of the first sensor 101 based on these pieces of information.

Specifically, the control portion 11 controls operations of the first sensor 101 based on the set value of the measurement range and the set value of the resolution indicated by the setting data 127. The control portion 11 then sets the set value indicated by the setting data 127 as the sampling frequency, and performs sampling processing on a signal output from the first sensor 101. Thus, the control portion 11 can acquire the first sensing data 121.

However, the method for acquiring the first sensing data 121 need not be limited to this example, and may be decided as appropriate, depending on the embodiment. For example, the aforementioned control and sampling processing of the first sensor 101 may alternatively be performed by another information processing apparatus. In this case, the control portion 11 may acquire the first sensing data 121 from the other information processing apparatus. Upon acquiring the first sensing data 121, the control portion 11 advances the processing to the next step S102.

Note that the first sensing data 121 may be configured as time-series data with a fixed time width, or may be configured to indicate an observation result at one point in time. The configuration of the first sensing data 121 need not be specifically limited, and may be decided as appropriate, depending on the embodiment.

### Step S102

In the next step S102, the control portion 11 operates as the identification code generating portion 113, and generates a sensing data ID for identifying the first sensing data 121 acquired in step S101. The sensing data ID is an example of a "first identification code".

The configuration of the sensing data ID need not be specifically limited, and may be decided as appropriate, depending on the embodiment. For example, the control portion 11 may generate, as a sensing data ID, any character string that has not been given to other first sensing data 121, i.e. any character string different from character strings of sensing data IDs that are paired with other first sensing data 121, as appropriate. The control portion 11 pairs the generated sensing data ID with the first sensing data 121 acquired in step S101. Thus, upon generation of the sensing data ID being completed, the control portion 11 advances the processing to the next step S103.

### Step S103

In the next step S103, the control portion 11 operates as the metadata generating portion 112, and generates the static metadata 123, the dynamic metadata 124, and the processed metadata 125 for the first sensing data 121 acquired in step S101. Upon generating the metadata 123 to 125, the control portion 11 advances the processing to the next step S104.

### (1) Static Metadata

As mentioned above, the static metadata 123 is configured to indicate an attribute relating to the specifications of the first sensor 101 that do not change over time. As long as the static metadata 123 is thus configured, the content thereof may be decided as appropriate, depending on the embodiment. The static metadata 123 may include, for example, information such as an attribute relating to performance of the first sensor 101, an attribute relating to device information regarding the first sensor 101, and an attribute relating to initial installation conditions of the first sensor 101. The control portion 11 may acquire information corresponding to respective items from the first sensor 101 or another information processing apparatus that holds information regarding the specifications of the first sensor 101, and generate the static metadata 123 based on the acquired information.

### (2) Dynamic Metadata

The dynamic metadata 124 is configured to indicate an attribute of the first sensor 101 at the point in time when the first sensing data 121 was obtained, the attribute relating to the form of use of the first sensor 101 that may dynamically change over time. As long as the dynamic metadata 124 is thus configured, the content thereof may be decided as appropriate, depending on the embodiment. Attributes relating to the form of use of the first sensor 101 indicated by the dynamic metadata 124 may include, for example, an attribute relating to operation settings of the first sensor 101, an attribute relating to the situation in which the first sensor 101 is installed, or the like.

The attribute relating to an operation setting of the first sensor 101 is, for example, a set value of the measurement range, a set value of the resolution in the measurement range, a set value of the sampling frequency, or the like. In this embodiment, information regarding the operation settings of the first sensor 101 is stored as the setting data 127 in the storage portion 12. The control portion 11 may acquire information regarding the operation settings of the first sensor 101 by referencing the setting data 127, and generate the dynamic metadata 124 based on the acquired information.

The attribute relating to the situation in which the first sensor 101 is installed is, for example, the angle at which the first sensor 101 is installed, the temperature around the first sensor 101, the distance between the first sensor 101 and an observation target, or the like. In this embodiment, the form of use of the first sensor 101 is monitored by the second sensor 102, which is connected to the sensor management unit 1. The control portion 11 may generate the dynamic metadata 124 based on the second sensing data 122 obtained by the second sensor 102 observing the form of use of the first sensor 101.

As a specific example, if the second sensor 102 is a temperature sensor and is installed in a region around the first sensor 101, the second sensing data 122 obtained by the second sensor 102 indicates the temperature around the first sensor 101. The control portion 11 may acquire this second sensing data 122 and generate, as the dynamic metadata 124, data indicating the temperature around the first sensor 101 based on the acquired second sensing data 122.

If the second sensor 102 is a gyro sensor and is attached to a housing of the first sensor 101, the second sensing data 122 obtained by the second sensor 102 indicates the tilt of the first sensor 101. The control portion 11 may acquire this second sensing data 122 and generate, as the dynamic metadata 124, data indicating the angle at which the first sensor 101 is installed based on the acquired second sensing data 122.

Note that the configuration of the dynamic metadata 124 need not be limited to this example, and may be decided as appropriate, depending on the embodiment. For example, at least one of the information representing an attribute relating to the operation settings of the first sensor 101 and the information representing an attribute relating to the installation situation may be omitted. The dynamic metadata 124 may also include information representing an attribute relating to the form of use of the first sensor 101, other than information representing an attribute relating to the operation settings of the first sensor 101 and information representing an attribute relating to the installation situation.

The control portion 11 may also generate the dynamic metadata 124 without depending on the setting data 127 and the second sensing data 122. For example, the control portion 11 may also generate the dynamic metadata 124 based on the first sensing data 121. As a specific example, if the first sensor 101 is an infrared sensor, the control unit 11 may identify the distance between the first sensor 101 and the observation target by analyzing the first sensing data 121, and generate data indicating the specified distance as the dynamic metadata 124.

The dynamic metadata 124 is configured to indicate an attribute relating to the form of use of the first sensor 101 at the point in time when the first sensing data 121 was obtained. For this reason, it is preferable that the point in time of the form of use of the first sensor 101 indicated by the dynamic metadata 124 coincides with the point in time at which the first sensing data 121 was obtained. However, the "point in time when the first sensing data 121 was obtained" need not be accurate.

That is to say, the point in time of the form of use of the first sensor 101 indicated by the dynamic metadata 124 and the point in time when the first sensing data 121 was obtained need not completely coincide with each other, and may be shifted from each other unless this shift critically affects the use of the dynamic metadata 124. The state where the point in time of the form of use of the first sensor 101 indicated by the dynamic metadata 124 and the point in time when the first sensing data 121 was obtained are shifted from each other to the extent that this shift does not critically affect the use of the dynamic metadata 124 is also included in "the point in time when the first sensing data 121 was obtained".

Accordingly, the control portion 11 may acquire the setting data 127 to be used to generate the dynamic metadata 124 and the second sensing data 122 at the same timing as the timing of acquiring the first sensing data 121, or may acquire the setting data 127 and the second sensing data 122 at a timing different from the timing of acquiring the first sensing data 121. Note that the method for acquiring the second sensing data 122 may be similar to the method for acquiring the first sensing data 121 in the aforementioned step S101.

### (3) Processed Metadata

As mentioned above, the processed metadata 125 is configured to indicate a feature value of the first sensing data 121 acquired in step S101. As long as the processed metadata 125 is thus configured, the content thereof may be decided as appropriate, depending on the embodiment. The control portion 11 can generate the processed metadata 125 by performing predetermined analysis processing on the first sensing data 121 acquired in step S101.

Note that the type of the predetermined analysis processing performed when generating the processed metadata 125 need not be specifically limited, and may be selected as appropriate, depending on the embodiment. The predetermined analysis processing may be, for example, labeling processing, calculation processing to derive the amount of change, calculation processing to derive a vector value, conversion processing, cleansing processing, filtering processing, or the like. Conversion processing is calculation processing for making the unit, scale, or the like uniform. Cleansing processing is calculation processing for eliminating data other than a true value of the sensing data. Filtering processing is calculation processing for applying a filter such as an LPF, an HPF, or a BPF to the sensing data.

The type of the feature value obtained as the processed metadata 125 through the analysis processing need not be specifically limited as long as the feature value indicates a feature of the first sensing data 121 acquired in step S101, and may be selected as appropriate, depending on the embodiment. The feature value obtained as the processed metadata 125 may be, for example, a label, the amount of change, a vector value, an outlier value, or the like.

### (4) Other Considerations

Note that the content of the dynamic metadata 124 and the processed metadata 125 depends on the timing of acquiring the first sensing data 121 and the content thereof. For this reason, the control portion 11 newly generates the dynamic metadata 124 and the processed metadata 125 for the acquired first sensing data 121 every time processing in steps S101 to S103 is repeated.

Meanwhile, the content of the static metadata 123 does not depend on the first sensing data 121. For this reason, after creating the static metadata 123 once, the control portion 11 need not newly generate the static metadata 123 for the same first sensor 101. That is to say, the control portion 11 may generate the static metadata 123 only when performing step S103 for the first time.

The timing of generating the static metadata 123 may differ from the timing of performing step S103. Before performing step S101, for example, the control portion 11 may connect the first sensor 101 to the sensor management unit 1, and generate the static metadata 123 when configuring initial settings to register the first sensor 101 to the sensor management unit 1.

### Step S104

In the next step S104, the control portion 11 operates as the identification code generating portion 113, and generates a static metadata ID, a dynamic metadata ID, and a processed metadata ID for identifying the static metadata 123, the dynamic metadata 124, and the processed metadata 125 that are generated in step S103. Each of these metadata IDs is an example of a "second identification code".

The configuration of the metadata IDs need not be specifically limited, and may be decided as appropriate, depending on the embodiment. For example, the control portion 11 can generate the metadata IDs similarly to the aforementioned sensing data ID. The control portion 11 pairs the generated static metadata ID with the static metadata 123 generated in step S103. The control portion 11 pairs the generated dynamic metadata ID with the dynamic metadata 124 generated in step S103. The control portion 11 pairs the generated processed metadata ID with the processed metadata 125 generated in step S103. Thus, upon generation of the metadata IDs being completed, the control portion 11 advances the processing to the next step S105.

Note that, as mentioned above, the static metadata 123 may be generated before step S101 is performed. For this reason, the timing of generating the static metadata ID may differ from the timing of performing step S104. Before performing step S101, for example, the control portion 11 may also connect the first sensor 101 to the sensor management unit 1 and generate the static metadata ID when configuring initial settings to register the first sensor 101 to the sensor management unit 1.

### Step S105

In the next step S105, the control portion 11 operates as the metadata managing portion 114, and associates the metadata 123 to 125 generated in step S103 with the first sensing data 121 acquired in step S101.

In this embodiment, the sensing data ID is generated for the first sensing data 121, and the metadata IDs are generated for the metadata 123 to 125. The control portion 11 associates the metadata 123 to 125 with the first sensing data 121, using the sensing data ID and the metadata IDs.

Also, in this embodiment, information indicating the correspondence relationship between the first sensing data 121 and the metadata 123 to 125 based on the aforementioned association is stored as the management data 126 in the storage portion 12. For this reason, the control portion 11 updates the management data 126 by adding the association result to the management data 126. Thus, the control portion 11 manages the correspondence relationship between the metadata 123 to 125 and the first sensing data 121.

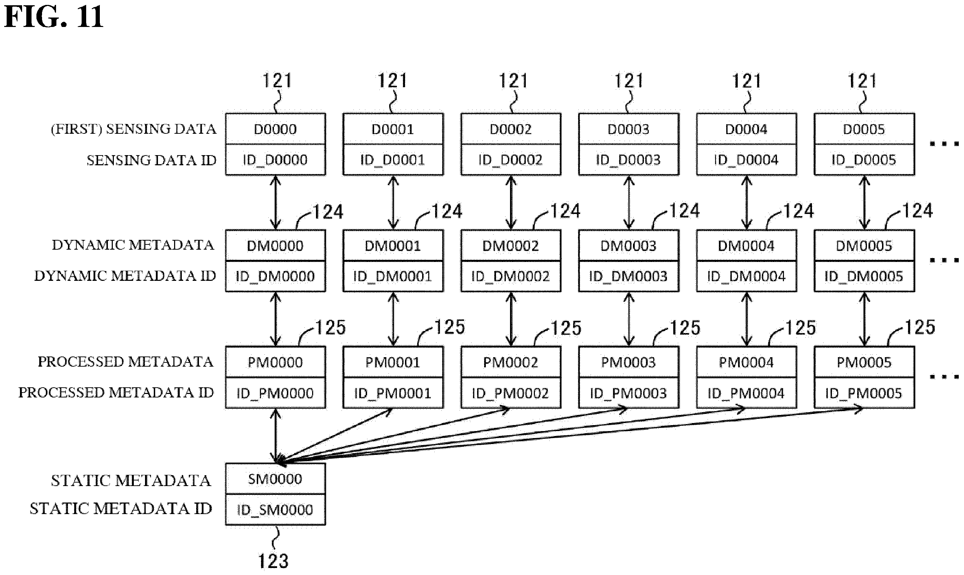

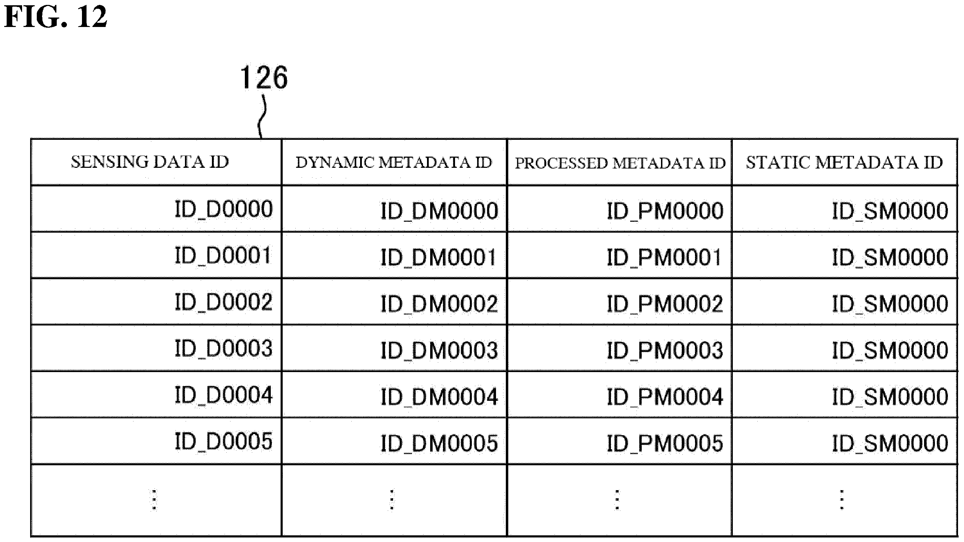

A specific example of the above-described processing will be described in detail, with reference to Figs. 11 and 12. Fig. 11 schematically shows an example of a correspondence relationship between the first sensing data 121 and the metadata 123 to 125. Fig. 12 schematically shows an example of the management data 126 according to this embodiment. Note that Figs. 11 and 12 show an example in which the dynamic metadata 124 and the processed metadata 125 are newly generated every time the first sensing data 121 is acquired, whereas the static metadata 123, once generated, is not newly generated thereafter.

In the example in Fig. 11, the first sensing data 121, such as "D0000", is acquired as a result of step S101 being performed repeatedly, and the sensing data ID, such as "ID_D0000", is accordingly associated with each piece of the first sensing data 121. Also, the dynamic metadata 124, such as "DM0000", and the processed metadata 125, such as "PM0000", is generated for each piece of the first sensing data 121 as a result of step S103 being performed repeatedly. In accordance with this, the dynamic metadata ID, such as "ID_DM0000", is associated with each piece of the dynamic metadata 124, and the processed metadata ID, such as "ID_PM0000", is associated with each piece of the static metadata 125. Furthermore, the static metadata 123 "SM0000" is generated. In accordance with this, the static metadata ID "ID_SM0000" is associated with this static metadata 123.

In this case, the control portion 11 associates the dynamic metadata 124 and the processed metadata 125 with the corresponding first sensing data 121. In the example in FIG. 11, the dynamic metadata 124 "DM000n" and the processed metadata 125 "PM000n" are associated with the first sensing data 121 "D000n" (n is a number from 0 to 5). In contrast, the control portion 11 associates the static metadata 123 with all pieces of the first sensing data 121. In the example in FIG. 11, the static metadata "SM0000" is associated with all pieces of the first sensing data 121 "D000n" (n is a number from 0 to 5).

The control portion 11 stores, as the management data 126, information indicating the correspondence relationship based on this association. In the example in Fig. 12, each record (row data) in the management data 126 indicates a correspondence relationship based on the association. Specifically, each record in the management data 126 has fields for storing the sensing data ID, the dynamic metadata ID, the processed metadata ID, and the static metadata ID. The control portion 11 can add the association result to the management data 126 by storing the associated IDs of the first sensing data 121 and the metadata 123 to 125 in the respective fields of a new record. Note that, in the example in Fig. 12, the management data 126 is expressed in a table format. However, the data format of the management data 126 need not be limited to such a table format, and may be selected as appropriate, depending on the embodiment.

Thus, the control portion 11 can associate the metadata 123 to 125 with the first sensing data 121. Also, a state is achieved in which the correspondence relationship based on the association is managed by the management data 126. After the above processing has been completed, the control portion 11 advances the processing to the next step S106.

### Step S105

In the next step S106, the control portion 11 stores the first sensing data 121 and the metadata 123 to 125 in the storage portion 12. After this storage processing has been completed, the control portion 11 advances the processing to the next step S107.

Note that the storage processing in this step S105 need not performed at this timing. For example, the control portion 11 may acquire the first sensing data 121, and then store this first sensing data 121 in the storage portion 12 at any timing. Also, the control portion 11 may generate the metadata 123 to 125 and then store the metadata 123 to 125 in the storage portion 12 at any timing.

### Step S107

In the next step S107, the control portion 11 operates as the first communicating portion 115, and transmits the first sensing data 121 acquired in step S101 to the user terminal 3 for which distribution thereof has been permitted by the network server 2. At this time, the control portion 11 may also transmit the sensing data ID together with the first sensing data 121 to the user terminal 3.

Also, the control portion 11 operates as the second communicating portion 116, and transmits the metadata 123 to 125 generated in step S103 to the user terminal 3. At this time, the control portion 11 may also transmit the metadata IDs together with the metadata 123 to 125 to the user terminal 3, similarly to the first sensing data 121.

Note that, to reduce the load for transmitting data, the first communicating portion 115 may communicate with an external device (user terminal 3) via a first communication port, and meanwhile, the second communicating portion 116 may communicate with the external device via a second communication port different from the first communication port. That is to say, the control portion 11 may transmit the first sensing data 121 to the user terminal 3 via the first communication port, and meanwhile, the control portion 11 may transmit the metadata 123 to 125 to the user terminal 3 via the second communication port.

Each of the communication ports is an end port for performing data communication. For example, the control portion 11 can transmit the first sensing data 121 and the metadata 123 to 125 via different communication ports by designating different port numbers using a TCP (Transmission Control Protocol) or a UDP (User Datagram Protocol). However, ports for transmitting the first sensing data 121 and the metadata 123 to 125 need not be limited to this example, and may be the same.

Also, the control portion 11 may transmit the first sensing data 121 and the metadata 123 to 125 to a target user terminal 3 via the network server 2, or may directly transmit the first sensing data 121 and the metadata 123 to 125 to the target user terminal 3 not via the network server 2. In the case of transmitting the first sensing data 121 and the metadata 123 to 125 via the network server 2, the network server 2 transfers the first sensing data 121 and the metadata 123 to 125 received from the sensor management unit 1 to the target user terminal 3.

The timing of transmitting the first sensing data 121 and the timing of transmitting the metadata 123 to 125 may be the same, or may differ. Furthermore, the timings of transmitting the respective metadata 123 to 125 may also be the same, or may differ. The timings of transmitting the first sensing data 121 and the metadata 123 to 125 may be decided as appropriate, depending on the embodiment.

Upon the transmission of the first sensing data 121 and the metadata 123 to 125 being completed, the control portion 11 ends the series of processing according to this example operation. In the user terminal 3, the application program 83 can then use the first sensing data 121 and the metadata 123 to 125. After ending the series of processing according to this example operation, the control portion 11 may also perform processing again from the aforementioned step S101. That is to say, the control portion 11 may also repeatedly perform the series of processing in the aforementioned steps S101 to S107 until the observation of the target using the first sensor 101 ends.

### Supplement

Note that the processing procedure for sensor management according to the above-described example operation may also be modified to the extent possible. For example, the series of processing in steps S101 to S104 and S106 and processing in step S107 may be performed at different timings. Processing in step S102 may be performed after processing in step S103. The control portion 11 may perform the associating processing in step S105 after performing the series of processing in steps S101 to S103 more than once.

If the content of the dynamic metadata 124 has changed while processing in steps S101 and S103 is repeatedly performed, the control portion 11 may operate as the catalog change portion 117, and transmit, to the network server 2, a command to change the content of the form of use of the provider data catalog 221 so as to conform to the content of the generated dynamic metadata 124. Thus, information regarding the latest form of use of the first sensor 101 can be reflected in the provider data catalog 221.

However, the method for updating the content of the form of use of the provider data catalog 221 need not be limited to this example. In the case where the first sensing data 121 and the metadata 123 to 125 is transmitted to the user terminals 3 via the network server 2, the network server 2 may change, without waiting for that command, information representing the form of use in the target provider data catalog 221 based on the content of the dynamic metadata 124 received from the sensor management units 1.

The control portion 11 may also receive, from a user, a change in the operation settings of the first sensor 101 via the network server 2, the user terminals 3, or other information processing apparatuses. At this time, information regarding the form of use in the user data catalog 222 may also be used to designate the content of the change in the operation settings of the first sensor 101. That is to say, the control portion 11 may also receive information regarding the form of use in the user data catalog 222, as a command to give an instruction to change the operation settings of the first sensor 101.

The control portion 11 may then correct the content of the setting data 127 to the content designated by the user, and change the operation settings of the first sensor 101 for acquiring the first sensing data 121. Thus, when one first sensor 101 is shared by a plurality of users, the operation settings of the first sensor 101 can be changed in accordance with a user's request.

### Features

As described above, in this embodiment, information regarding the form of use of the first sensor 101 at the point in time when the first sensing data 121 is obtained is generated as the dynamic metadata 124, and the generated dynamic metadata 124 is managed in association with the first sensing data 121, through the processing in steps S101 to S105. Thus, in step S107, the user terminals 3 can be provided with the dynamic metadata 124 indicating information regarding the form of use of the first sensor 101 at the point in time when the first sensing data 121 is obtained, together with the first sensing data 121 obtained by the first sensor 101.

As a result, when using the first sensing data 121, the user terminals 3, can check the form of use of the first sensor 101 at the point in time when the first sensing data 121 to be used is obtained, by referencing the associated dynamic metadata 124. That is to say, the user terminals 3 can omit processing to access the first sensor 101 or make an inquiry to the sensor management unit 1 that manages the first sensor 101, for example, in order to check the form of use of the first sensor 101. Accordingly, according to this embodiment, the time and effort required to check the form of use of the first sensor 101 when using the first sensing data 121 can be reduced.

Note that the user terminals 3 can use the dynamic metadata 124 to judge the reliability, availability, or the like, of the first sensing data 121. Furthermore, the user terminals 3 can track whether or not the form of use of a target first sensor 101 has been changed, by continuously acquiring the dynamic metadata 124.

Also, in this embodiment, the static metadata 123 is generated in addition to the dynamic metadata 124, and the generated static metadata 123 is associated with the first sensing data 121. Thus, the user terminals 3 can search for the first sensing data 121 based on the specifications of the first sensor 101, by acquiring the static metadata 123. Accordingly, accordance to this embodiment, the searchability of the first sensing data 121 can be enhanced by giving the static metadata 123.

Also, in this embodiment, the processed metadata 125 is generated in addition to the dynamic metadata 124, and the generated processed metadata 125 is associated with the first sensing data 121. Thus, the user terminals 3, when using the first sensing data 121, can acquire a feature value of the first sensing data 121 by referencing the associated processed metadata 125, without performing predetermined analysis processing. Accordingly, according to this embodiment, the user terminals 3 can omit analysis processing to derive a feature value of the first sensing data 121, and a processing load for using the first sensing data 121 can be reduced.

Also, in this embodiment, the second sensor 102, as well as the first sensor 101, is connected to the sensor management unit 1, and the form of use of the first sensor 101 is monitored by the second sensor 102. For this reason, in step S103, the dynamic metadata 124 can be appropriately generated based on the second sensing data 122 obtained by the second sensor 102.

### §4 Example modifications

Although the embodiment of the present invention has been described in detail, the above description is merely an example of the invention in all respects. Needless to say, various improvements and modifications may be made within the scope of the invention. For example, the following modifications are possible. Note that, in the following description, the same reference numerals are used for the same constituent elements in the above embodiment, and descriptions of the same points as those in the above embodiment are omitted as appropriate. The following modifications may be combined as appropriate.

### 4.1

In this embodiment, the sensor device 100 (sensor management unit 1) is connected to the network server 2 via a network, and transmits the first sensing data 121 to the user terminal 3 of each user in accordance with the result of matching performed by the network server 2. However, the method for providing the first sensing data 121 need not be limited to this example, and may be decided as appropriate, depending on the embodiment. For example, the first sensing data 121 and the metadata 123 to 125 may be stored in a storage medium, and may be provided via this storage medium to an external device. In this case, at least one of the first communicating portion 115 and the second communicating portion 116 may be omitted. Also, the sensor management unit 1 may be provided with one communicating portion for transmitting the first sensing data 121 and the metadata 123 to 125, rather than being provided with the first communicating portion 115 and the second communicating portion 116.

### 4.2

In step S103 in the above embodiment, the control portion 11 of the sensor management unit 1 can generate the dynamic metadata 124 based on the second sensing data 122 obtained by the second sensor 102. However, the method for generating the dynamic metadata 124 need not be limited to this example, and the control portion 11 may also generate the dynamic metadata 124 without basing it on the second sensing data 122. In this case, the second sensor 102 may be omitted.

### 4.3

In the above embodiment, the static metadata 123 and the processed metadata 125 are generated in addition to the dynamic metadata 124, and are associated with the first sensing data 121. However, the static metadata 123 and the processed metadata 125 need not necessarily be generated. At least one of the static metadata 123 and the processed metadata 125 may be omitted.

### 4.4

In the above embodiment, the content of the provider data catalog 221 is changed based on the dynamic metadata 124, and thus, the sensor management unit 1 includes the catalog change portion 117 as a software module. However, the catalog change portion 117 may be omitted.

In the above embodiment, the sensing data ID is associated with the first sensing data 121, and the metadata IDs are associated with the metadata 123 to 125. The sensing data ID and the metadata IDs are used to associate the first sensing data 121 and the metadata 123 to 125 with each other. However, the method for associating the first sensing data 121 and the metadata 123 to 125 with each other need not be limited to this example, and may be decided as appropriate, depending on the embodiment. The first sensing data 121 and the metadata 123 to 125 may be associated with each other without depending on the sensing data ID and the metadata IDs. In this case, the sensing data ID and the metadata IDs may be omitted.

In the above embodiment, the sensor device 100 (sensor management unit 1) may also provide the second sensing data 122 together with or in place of the first sensing data 121, to an external device such as the user terminal 3. In this case, the sensor management unit 1 may also generate and the metadata 123 to 125 for the second sensing data 122, and manage the generated metadata 123 to 125 in association with the second sensing data 122. That is to say, the second sensing data 122 may be dealt with as the "sensing data" of the present invention, together with or in place of the first sensing data 121.

In the above embodiment, the dynamic metadata 124 relates to an attribute that may change in accordance with the form of use, whereas the static metadata 123 relates to an attribute that will not change in accordance with the form of use. The period during which such a change occurs/does not occur may be limited to a period during which sensing data is provided. That is to say, as a result of the matching performed by the network server 2, an attribute of the first sensor 101 that may change during the period during which the first sensing data 121 is provided from the sensor management unit 1 to a target user terminal 3 may be dealt with as the content of the dynamic metadata 124, and an attribute of the first sensor 101 that will not change during this period may be dealt with as the content of the static metadata 123. In this case, the attribute indicated by the static metadata 123 may change (be changed) out of the period during which the first sensing data 121 is provided.

### INDEX TO THE REFERENCE NUMERALS

1 ... Sensor management unit, 11 ... Control portion, 12 ... Storage portion, 13 ... Communication interface, 14 ... External device interface, 15 ... Input device, 16 ... Output device, 17 ... Drive, 100 ... Sensor device, 101 ... First sensor (sensor), 102 ... Second sensor (sub-sensor), 111 ... Sensing data acquisition portion, 112 ... Metadata generating portion, 113 ... Identification code generating portion, 114 ... Metadata managing portion, 115 ... First communicating portion, 116 ... Second communicating portion, 117 ... Catalog change portion, 121 ... First sensing data, 122 ... Second sensing data, 123 ... Static metadata, 124 ... Dynamic Metadata, 125 ... Processed metadata, 126 ... Management data, 127 ... Setting data, 2 ... Network server, 21 ... Control portion, 22 ... Storage portion, 23 ... Communication interface, 221 ... Provider data catalog, 222 ... User data catalog, 3 ... User terminal, 31 ... Control portion, 32 ... Storage portion, 33 ... Communication interface, 34 ... Input device, 35 ... Output device, 81 ... Sensor management program, 82 ... Program, 83 ... Program, 91 ... Storage medium

## Claims

1. A sensor management unit comprising:
a sensing data acquisition portion configured to acquire sensing data obtained by a sensor observing a target;
a metadata generating portion configured to generate dynamic metadata indicating an attribute of the sensor at a point in time when the sensing data is obtained, the attribute relating to a form of use of the sensor that may dynamically change over time; and
a metadata managing portion configured to manage the generated dynamic metadata in association with the sensing data.

2. The sensor management unit according to claim 1,
wherein the attribute relating to the form of use of the sensor indicated by the dynamic metadata includes an attribute relating to an operation setting of the sensor.

3. The sensor management unit according to claim 1 or 2,
wherein the attribute relating to the form of use of the sensor indicated by the dynamic metadata includes an attribute relating to a situation in which the sensor is installed.

4. The sensor management unit according to any one of claims 1 to 3,
wherein the metadata generating portion further generates processed metadata relating to a feature value of the sensing data by analyzing the acquired sensing data, and
the metadata managing portion further manages the generated processed metadata in association with the sensing data.

5. The sensor management unit according to any one of claims 1 to 4,
wherein the metadata generating portion further generates static metadata indicating an attribute relating to specifications of the sensor that do not change over time, and
the metadata managing portion further manages the generated static metadata in association with the sensing data.

6. The sensor management unit according to any one of claims 1 to 5, further comprising:
a first communicating portion configured to transmit the sensing data to an external device; and
a second communicating portion configured to transmit the dynamic metadata to the external device,
wherein the first communicating portion communicates with the external device via the first communication port, and
the second communicating portion communicates with the external device via a second communication port different from the first communication port.

7. The sensor management unit according to any one of claims 1 to 6,
wherein the metadata generating portion generates the dynamic metadata based on sensing data obtained by a sub-sensor observing the form of use of the sensor.

8. A sensor device comprising:
the sensor management unit according to any one of claims 1 to 7; and
the sensor.

9. A computer-implemented sensor management method comprising:
a step of acquiring sensing data obtained by a sensor observing a target;
a step of generating dynamic metadata indicating an attribute of the sensor at a point in time when the sensing data is obtained, the attribute relating to a form of use of the sensor that may dynamically change over time; and
a step of associating the generated dynamic metadata with the sensing data.

10. A sensor management program for causing a computer to carry out:
a step of acquiring sensing data obtained by a sensor observing a target;
a step of generating dynamic metadata indicating an attribute of the sensor at a point in time when the sensing data is obtained, the attribute relating to a form of use of the sensor that may dynamically change over time; and
a step of associating the generated dynamic metadata with the sensing data.
